# EUROPEAN PATENT SPECIFICATION

(11) **EP 4 425 024 B1**
(45) Date of publication and mention of the grant of the patent: **18.11.2026**
(21) Application number: 24155808.9
(22) Date of filing: 05.02.2024
(51) Int. Cl.: F16L 13/02, F16L 25/00, F16L 25/14, F16L 33/26

(54) **SYSTEMS AND METHODS FOR FORMING A JOINT BETWEEN A PIPE AND A HOSE**
SYSTEME UND VERFAHREN ZUR HERSTELLUNG EINER VERBINDUNG ZWISCHEN EINEM ROHR UND EINEM SCHLAUCH
SYSTÈMES ET PROCÉDÉS DE FORMATION D'UN JOINT ENTRE UN TUYAU ET UN TUYAU

(30) Priority: 28.02.2023 US 202318175858
(43) Date of publication of application: 04.09.2024
(73) Proprietor: GE Vernova Technology GmbH, 5400 Baden (CH)
(72) Inventor: GAMERO MENDEZ, Jose Mikhail, 76146 Queretaro (MX); BARRERA, Miroslava Franco, 76146 Queretaro (MX); VAZQUEZ CARMONA, Cesar Octavio, 76146 Queretaro (MX)
(74) Representative: Novagraaf Group

(56) References cited:
- EP-B1- 1 719 940
- WO-A1-2022/046849
- CN-A- 110 925 503
- US-A- 5 263 747

## Description

### BACKGROUND

The field of the disclosure relates to creating a joint between a pipe and a hose, and more particularly to, systems and methods for joining a pipe and a flexible hose together using a transition assembly.

Conventionally, a joint may be created between a pipe and a hose by manually forming a series of welds. The hose may be a flexible metal hose having multiple layers, such as an inner corrugated layer, a braided metal intermediate layer, and/or a protective outer layer. The joint may be initially formed with an internal weld that extends across the multiple layers of the flexible metal hose. An external weld may then be formed across the internal weld and the pipe, such that during the process, the internal weld becomes at least partially obscured by the external weld.

After the internal and external welds are formed, the joint is inspected. However, because the internal weld is at least partially obscured, a visual inspection is not sufficient and as such, various other inspection methodologies must be used, including pressure testing, vacuum box testing, nondestructive testing, and/or radiography, to determine the leak tightness and robustness of the joint. Furthermore, if a leak is identified, it may be challenging to repair and/or replace the joint and depending on the severity of the leak and/or the relative location of the leak, in some cases, the whole assembly must be scrapped. For example, if a leak forms between the internal weld and the hose, and/or a leak is found between the boundary of the internal weld and the external weld, there may not be any access to such a leak location to repair or replace the weld. Furthermore, because of the location of the j oint, sharp edges may be formed and consequently, cracks may propagate within the joint between and through the internal weld and the external weld.

Conventionally, the internal and external welds are formed manually, at least partially because the first weld extends across along an irregular boundary of the multiple exposed layers of the hose. Subsequently, the external weld is formed across the irregular boundary of the hose and the internal weld. Furthermore, manual welding may be required because clamping of the working pieces, required for automatic welding operations, may deform and/or perforate the thin layers of the hose.

Accordingly, a need exists for an improved method of connecting the joint between a pipe and a hose that alleviates the aforementioned drawbacks of conventional joint forming processes used to join a hose and pipe.

CN 110925503 A relates, according to a machine translation, to a stainless steel corrugated flexible connector for a copper pipe joint, comprising a bellows and a mesh sleeve sleeved on the outside of the bellows, the outer surfaces of both ends of the bellows and the mesh sleeve are fixed with stainless steel reinforcement rings by argon arc welding, both ends of the bellows and the mesh sleeve are provided with stainless steel pipe sleeves, the joints of the stainless steel pipe sleeve, the stainless steel reinforcement ring, the bellows and the mesh sleeve are provided with a first welding ring by argon arc welding, the interior of the stainless steel pipe sleeve is sleeved with a copper pipe joint, and the connection between the copper pipe joint and the stainless steel pipe sleeve is provided with a second welding ring by copper brazing. EP 1 719 940 relates to a flexible hose line for air conditioning circuit having a seal joint system between a rigid tubular element and a flexible tubular element, thereby allowing a sealed connection between a rigid aluminum tube and a flexible pipe and including a rigid tubular connection insert made of stainless steel whose Young's modulus of elasticity is 150 MPa greater than that of aluminum that has a modulus of elasticity of the order of 70 MPa; the sealed connection between the rigid tube and the insert is ensured by a brazing operation, where the inner diameter of the tube totally corresponds to the diameter of the insert.

US5263747A discloses an end of a convoluted metal hose (22) connected to an adaptor (24) having an end surface (R) which is rounded to complement a contour of an endmost convolution. A straight section of the convoluted hose extends unbonded some distance through a bore in the adaptor, where it is welded in place. This way any flexing is by a section of the wrapping over the rounded end (R) , the wrapping section being remote from any heat damage which may result from the welding. The internal transition between the bores of the hose and adaptor is straight and smooth, free of any crevice.

### SUMMARY

In one aspect, a method of connecting a pipe and a hose is provided. The method includes providing a transition assembly including a hose end, a pipe end opposite the hose end, and an inner surface defining a transition assembly passage extending through the transition assembly from the hose end to the pipe end. The method includes engaging the hose end of the transition assembly with the hose such that a first connection is formed between the transition assembly and the hose. The method further includes engaging the pipe end of the transition assembly with the pipe such that a second connection between the transition assembly and the pipe is formed. The second connection is spaced an axial distance from the first connection.

In another aspect, a transition assembly for connecting a pipe to a hose is provided. The transition assembly includes a pipe end formed with a first surface that is shaped complementary to a pipe contact surface of the pipe and an opposite hose end formed with a second surface that is shaped complementary to a hose contact surface of the hose. The transition assembly further includes an inner surface defining a transition assembly passage that extends between the pipe and hose ends. A first connection is formed when the hose is engaged with the hose end and a second connection is formed when the pipe is engaged with the pipe end. A second connection is spaced an axial distance from the first connection.

In another aspect, a connection system for connecting a hose and a pipe is provided. The connection system includes a pipe including an outer surface having a pipe contact surface and an inner surface defining a pipe passageway and a hose including an inner layer and at least one secondary layer. The inner layer includes a hose contact surface and defines a hose passage. The system includes a transition assembly including a pipe end formed with a first surface that is shaped complementary to the pipe contact surface of the pipe, an opposite hose end formed with a second surface that is shaped complementary to the hose contact surface of the hose, and an inner surface defining a transition assembly passage that extends between the pipe and hose ends. A first connection is formed when the hose is engaged with the hose end and a second connection is formed when the pipe is engaged with the pipe end. The second connection is spaced an axial distance from the first connection.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a schematic illustration of a conventional joint formed between a hose and a pipe.
FIG. 2 is an image of an exemplary sharp edge formation that consequently may form a fracture in a conventional joint formed between a hose and a pipe.
FIG. 3 is a cross-sectional view of an exemplary joint formed between a hose and a pipe including one embodiment of a transition assembly.
FIG. 4 is a detailed cross-sectional view of the transition assembly shown in Fig. 3.
FIG. 5 is a cross-sectional view of an exemplary joint formed between a hose and a pipe including an alternative embodiment of a transition assembly.
FIG. 6 is a detailed cross-sectional view of the transition assembly shown in Fig. 5.
FIG. 7 is a flowchart of an exemplary method of forming a joint using a transition assembly.

Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings. The singular forms "a," "an," and "the" include plural references unless the context clearly dictates otherwise. "Optional" or "optionally" means that the subsequently described event or circumstance may or may not occur, and that the description includes instances where the event occurs and instances where it does not. Furthermore, references to "one embodiment" are not intended to be interpreted as excluding the existence of additional embodiments that also incorporate the recited features. Moreover, unless explicitly stated to the contrary, embodiments "including" or "having" an element or a plurality of elements having a particular property may include additional such elements not having that property.

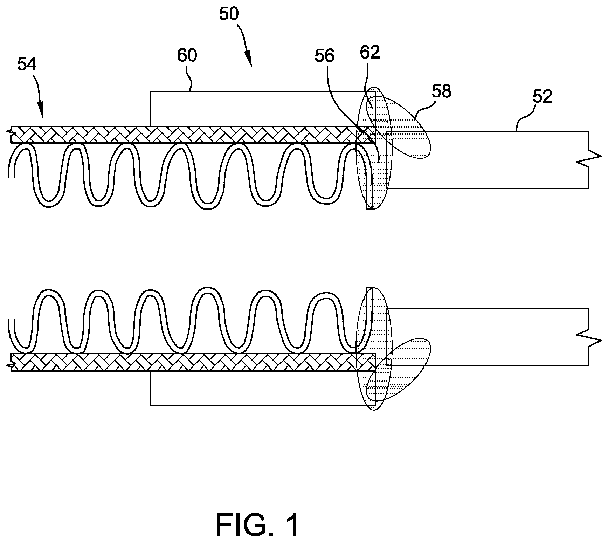

Referring now to the drawings, Fig. 1 illustrates an exemplary conventional joint 50 between a pipe 52 and a hose 54. In the exemplary embodiment, joint 50 is formed with both an internal weld 56 and an external weld 58, and includes an optional collar 60 that circumscribes the hose 54. During the process, the internal weld 56 is initially formed on a front-end surface of the hose 54, e.g., the weld 56 extends across one or more layers of the hose 54, and/or a front-end surface of the collar 60. Subsequently, after the internal weld 56 is formed, the external weld 58 is then extended across at least a portion of the internal weld 56 and the pipe 52. When completed, the external weld 58 is in direct contact with the internal weld 56 such that a boundary 62 is created between the internal and external welds 56 and 58, respectively. As seen in Fig. 1, after the external weld 58 is complete, at least a portion of the internal weld 56 is "covered" and is visually obstructed. For example, in the exemplary embodiment, after the external weld 58 is complete, the internal weld 56 may not be visible or accessible. As such, the internal weld 56 may not be visually inspected, or manually reformed (*e.g*., reheated, patched, etc.), repaired, and/or replaced, after the external weld 58 is complete.

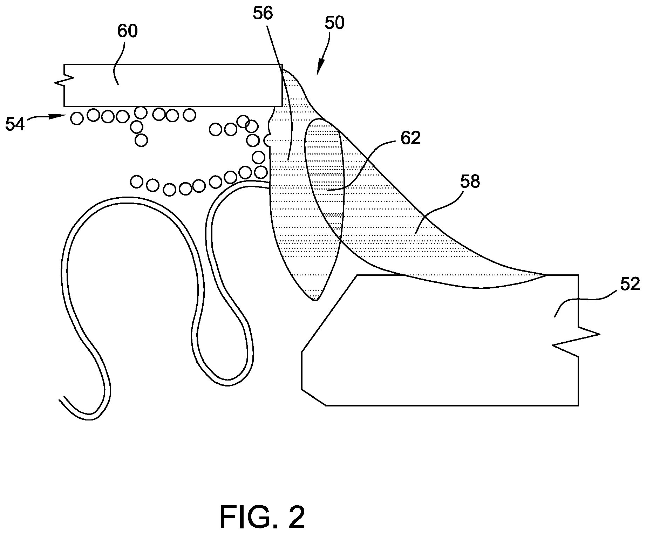

Fig. 2 depicts an image of an exemplary crack formation that may form the boundary 62 created between the internal weld 56 and the external weld 58 of the joint 50. Over time, continued exposure to flexing, thermal strains, and/or movement may cause cracking to develop in the boundary 62. Moreover, depending on the types of materials used in fabricating the pipe 52 and/or hose 54, the integrity of the welds 56 and/or 58, a grain boundary may form at the boundary 62 defined between the welds 56 and 58. Stresses, strains, crack propagation, and/or creep may be increased within at least some known grain boundaries.

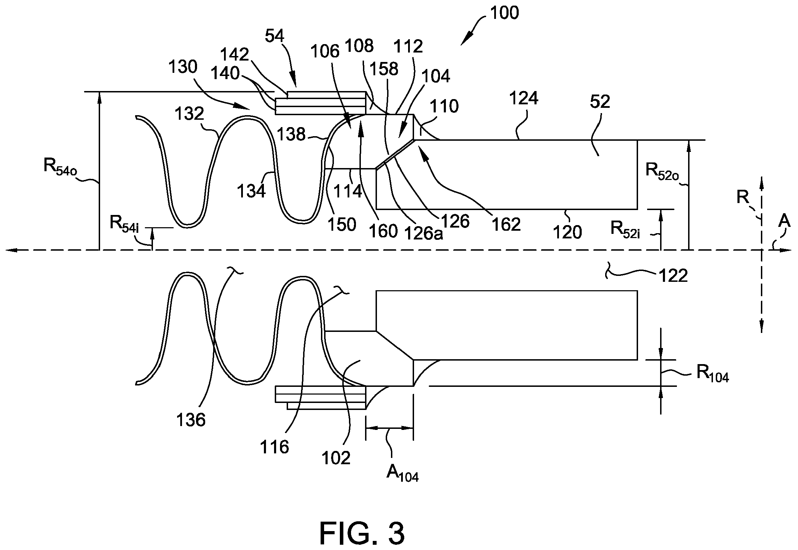

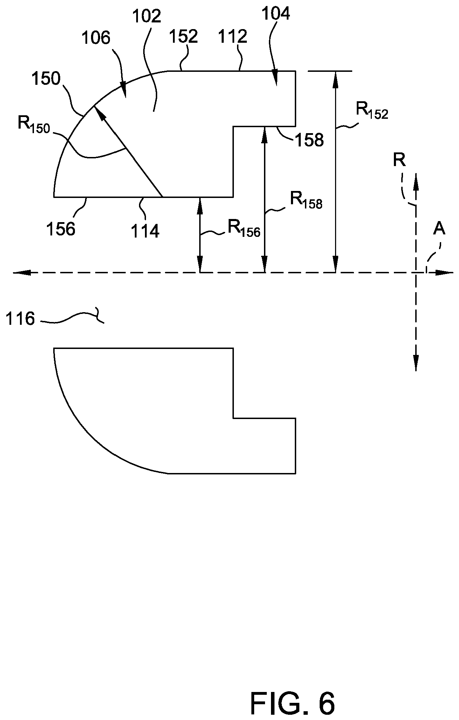

With reference to Figs. 3-6, exemplary embodiments are described herein that relate to methods and systems for use in forming a joint 100, such as a sealed connection, between the pipe 52 and the hose 54. The joint 100 formed includes a transition assembly 102 including a pipe connection end 104 and an opposite hose connection end 106. The transition assembly 102 includes an outer surface 112 and an inner surface 114 that defines a transition assembly passage 116. The transition assembly passage 116 extends completely through the transition assembly 102. The transition assembly 102 may engage with both the hose 54 and the pipe 52. For example, the pipe connection end 104 may couple with the pipe 52, and hose connection end 106 may engage the hose 54, such that the hose 54 and the pipe 52 are engaged at opposing ends of the transition assembly 102 thereby separating the hose 54 and the pipe 52 in both an axial A direction and/or a radial R direction. The transition assembly 102 maintains at least one of an axial separation A₁₀₂ and/or a radial separation R₁₀₂, between the hose 54 and the pipe 52 such that two independent connections may be formed, i.e., a hose connection 108 between the hose 54 and the transition assembly 102, and a pipe connection 110 between the pipe 52 and the transition assembly 102.

In the exemplary embodiment, the pipe 52 includes an inner surface 120 that defines a pipe passage 122 extending through the pipe 52. The pipe 52 includes an outer surface 124. The inner surface 120 and the outer surface 124 may be cylindrical, such that the pipe 52 has an inner radius R₅₂ᵢ and an outer radius R₅₂ₒ. The pipe 52 may also include a pipe contact surface 126 that contacts the transition assembly 102 when the transition assembly 102 engages the pipe 52.

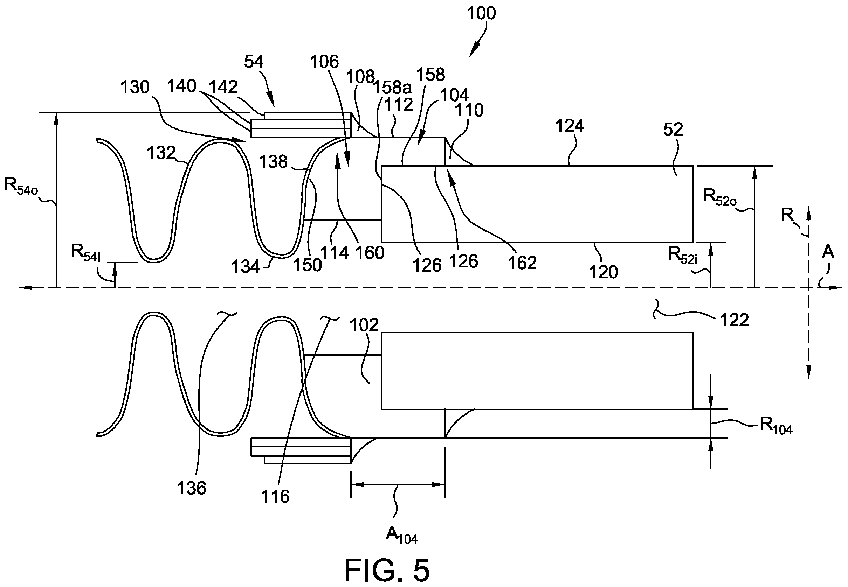

In some embodiments, contact surface 126 may be tapered, e.g., cone shaped, and may include an obliquely-oriented surface 126a *see* Fig. 3. More specifically, contact surface 126 may be tapered relative to the axial direction, and/or may be tapered relative to the inner surface 120 of the pipe 52. In some embodiments, contact surface 126 may not be tapered, e.g., the pipe contact surface 126 may be formed with a substantially constant radius R₅₂ₒ, *see* Fig. 5. Alternatively, the pipe 52, and the pipe contact surface 126, may be any other type of pipe 52, having any suitable shape and/or dimension that enables the pipe 52 to be engaged with the transition assembly 102, as described herein.

The hose 54 may be a braided metal hose including one or more layers 130. In the exemplary embodiment, the hose 54 includes an inner layer 132 having an inner surface 134 that defines a hose passage 136. The inner layer 132 may be corrugated. For example, the inner layer 132 may have corrugations that are substantially parallel, *e.g.,* the corrugations are independent and spaced a distance from adjacent corrugations. Alternatively, the inner layer 132 may have a helical corrugation *e.g.,* the corrugation is formed as a continuous corrugation that spirals about the length of the hose 54. The hose 54 may include one or more braided layers and/or an armor 140. The one or more braided layers and/or an armor 140 may circumscribe the inner layer 132. The hose 54 may include a protective layer 142. The protective layer 142 may circumscribe the one or more braided layers 140 and/or the inner layer 132. The hose 54 may also include at least one hose contact surface 138 that engages the transition assembly 102 when the transition assembly 102 is fully coupled with the hose 54. The hose contact surface 138 may be a curved surface, e.g., the corrugated inner layer 132, but is not limited to only being a curved surface. The hose 54 includes an inner radius R₅₄ᵢ and an outer radius R₅₄ₒ.

The hose 54 may be flexible and/or the hose 54 may be rated for highpressure applications. For example, the hose 54 may be rated for pressures up to 310 Bar (1500 °F), 365 bar (1500 °F), and/or 827 bar (1500 °F). Alternatively, the hose 54 may be any other type of hose, having any suitable shape and/or dimension, that enables the hose 54 to be engaged with the transition assembly 102, as described herein.

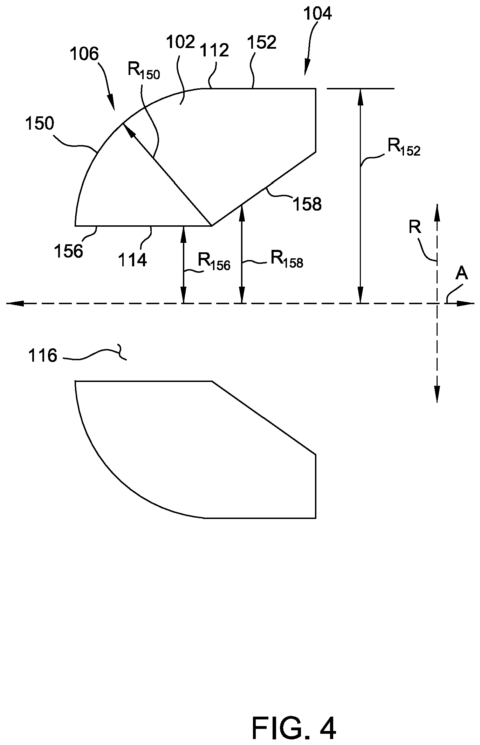

With reference to FIG. 4, in the exemplary embodiment, the hose end 106 includes a first outer surface 150 and a first inner surface 156, and the pipe end 104 includes a second outer surface 152 and a second inner surface 158. The first outer surface 150 may be shaped complementary to the hose contact surface 138, and the second inner surface 158 may be shaped complementary to the pipe contact surface 126. For example, the first outer surface 150 may be shaped to contact the hose contact surface 138 and the second inner surface 158 may be shaped to contact the pipe contact surface 128. The first outer surface 150 and the second inner surface 158 may be shaped to conform to the contact surfaces 138, 126, respectively, as described below.

The first inner surface 156 may be formed with a radius R₁₅₆, and the second inner surface 158 may be formed with a radius R₁₅₈ that in the exemplary embodiment is different than radius R₁₅₆. For example, the radius R₁₅₈ may be greater than radius R₁₅₆. The radius R₁₅₆ and the radius R₁₅₈ may be substantially constant or, alternatively, may vary to form a tapered slope, relative to the axial direction A. In some embodiments, the radius R₁₅₆ and/or the radius R₁₅₈ may be approximately the same as the R₅₂ᵢ of the pipe 52 and/or the R₅₄ᵢ of the hose 54.

When the hose 54 is engaged with the transition assembly 102, a hose boundary connection 160 is formed between the first outer surface 150 and the hose contact surface 138. Similarly, when the pipe 52 is engaged with the transition assembly 102, a pipe boundary connection 162 is formed between the second inner surface 158 and the pipe contact surface 126. The hose boundary connection 160 and the pipe boundary connection 162 are separated by at least one of the axial distance A₁₀₄ and/or the radial distance R₁₀₄.

In the exemplary embodiments, the pipe end 104 is sized and shaped to circumscribe a portion of the outer surface 124 of the pipe 52, e.g., a portion of the pipe 52 may be disposed within the transition assembly passage 116, such that the second inner surface 158 of the transition assembly 102 may contact the pipe contact surface 126 of the pipe 52. The hose end 106 is sized and shaped to fit within the hose passage 136, and the first outer surface 150 may contact the hose contact surface 138 of the hose 54, as will be described in more detail below. Alternatively, in some other embodiments, the pipe end 104 may be sized and shaped to fit within the pipe passage 122, and the hose end 106 may be sized and shaped to circumvent the exterior of the hose 54, *e.g.,* a portion of the hose 54 may be disposed within the transition assembly passage 116.

In the exemplary embodiment, the first outer surface 150 is sized and shaped to engage the inner layer 132 of the hose 54. For example, surface 150 may engage layer 132 in a friction fit, a press fit, a clearance fit, a transition fit, and/or any other engagement that enables assembly 102 to function as described herein. The fits and tolerance may be selected according to ISO standards and/or ANSI standards, for example. The clearance defined between the first outer surface 150 and the inner surface 134 may be any suitable clearance necessary for best practices for press-fit assemblies. In the exemplary embodiment, the first outer surface 150 is sized and shaped complementary to the hose contact surface 138 of the hose 54. For example, the hose contact surface 138 of the hose 54 may be corrugated, as described above, and the first outer surface 150 may have a radius R₁₅₀ that is substantially similar to, or less than a radius of curvature of a corrugation of the hose 54. The first outer surface 150 may be smooth, and formed without sharp corners or edges, to prevent the first outer surface 150 from deforming or puncturing the hose 54, e.g., puncturing the inner layer 132 of the hose 54. For example, the first outer surface 150, and/or the first inner surface 156, may include one or more rounded edges. In addition, the first outer surface 150 may be shaped to reduce stress concentrations from forming between the first outer surface 150 and the hose 54.

The second inner surface 158 is sized and shaped to engage with the pipe contact surface 126 of the pipe 52. For example, surface 158 may engage pipe contact surface 126 in a friction fit, a press fit, a clearance fit, a transition fit, and/or any other engagement that enables assembly 102 to function as described herein. The fits and tolerance may be selected according to ISO standards and/or ANSI standards, for example. The clearance between the second inner surface 158 and the pipe contact surface 126 may be any suitable clearance necessary for best practices for press-fit assemblies. In the exemplary embodiment, the second inner surface 158 is sized and shaped complementary to the one or more pipe contact surfaces 126 of the pipe 52. For example, the second inner surface 158 may be tapered to match the obliquely-oriented pipe contact surface 126a. *See* Fig. 3. In another embodiment, the second inner surface 158 may be cylindrical to match with the cylindrical pipe contact surface 126. *See* Fig. 5. The second inner surface 158 may be any suitable shape and size such that the second inner surface 158 may contact the pipe contact surface 126 with limited clearance. The second inner surface 158 may be any suitable shape and size such that at least a portion of the pipe 52 may be press fit within the transition assembly passage 116 defined by the second inner surface 158. **In** some embodiments, the second inner surface 158 includes a secondary surface 158a that contacts the pipe 52, restricting further insertion of the pipe 52 into transition assembly passage 116. *See* Fig. 5. **In** some embodiments, the secondary surface 158a is annular in shape, matching the annular surface of the pipe 52.

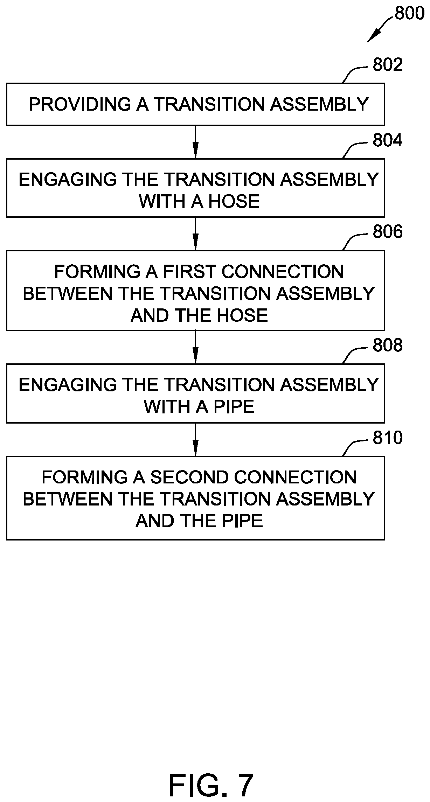

Fig. 7 illustrates an exemplary method 800 of forming a joint between a hose, e.g., hose 54, and a pipe, e.g., pipe 52, is provided. For the purposes of discussion, the method 800 is described in conjunction with the components described in Figs. 1-6. However, it should be noted that method 800 is not limited to only being used with the components described herein. In the exemplary embodiment, the method 800 includes providing 802 the transition assembly 102 including the hose end 106 and the pipe end 104. In an alternative embodiment, the method 800 may also include forming the transition assembly 102 via a machining process, a lathing process, and/or a casting process. A machining process may be used to bore out the transition assembly passage 116, e.g., to smooth and form the inner surfaces 156, 158, and/or to smooth and to form the outer surfaces 150, 152 of the transition assembly 102.

Method 800, in the exemplary embodiment, includes engaging 804 the hose end 106 of the transition assembly 102 with the hose 54 to form the hose boundary connection 160. In some cases, engaging 804 the transition assembly 102 with the hose 54 may include inserting the hose end 106 into the hose passage 136. When the transition assembly 102 is fully engaged 804 with the hose 54, the inner layer 132 of the hose 54 may contact at least a portion of the first outer surface 150 of the hose end 106. Engaging 804 the transition assembly 102 with the hose 54 may also include press-fitting the hose end 106 into the hose passage 136 such that an interference fit, or any suitable fit, is created between the first outer surface 150 of the transition assembly 102 and the hose contact surface 138 of the hose 54. The fit created between the hose end 106 and hose passage 136 facilitates retaining the position of the hose 54 and the transition assembly 102 in alignment. In some embodiments, engagement between the transition assembly 102 and the hose 54 may not be necessarily fixedly secured in position, such that the position of the hose 54 and the transition assembly 102 is retained, but in a fit that is not tight enough to create a seal between the hose 54 and transition assembly 102 that would prevent leakage of a fluid, (*e.g.,* a liquid and/or a gas). Alternatively, engagement between the transition assembly 102 and the hose 54 may retain the position of the hose 54 and the transition assembly 102 and create a seal between the hose 54 and the transition assembly 102.

After the transition assembly 102 is fully engaged with the hose 54, method 800 includes forming 806 the hose connection 108 between the transition assembly 102 and the hose 54. In the exemplary embodiment, the hose connection 108 creates a seal that prevents leakage of fluid, at the hose boundary connection 160 between the transition assembly 102 and the hose 54. The hose connection 108 may also rigidly connect the hose 54 and the transition assembly 102, preventing relative motion, e.g., axial translation and/or rotation, between the hose 54 and the transition assembly 102. Forming 806 the hose connection 108 between the hose 54 and the transition assembly 102 may include one or more of the following processes: welding, brazing, and/or soldering. For example, forming 806 the hose connection 108 may include heating adjacent components above or below, the melting point of the material of the components. In another example, forming 806 may include heating and/or melting a material and placing the melted material on both components. Cooling of the melted material forms the hose connection 108 between the two components.

Method 800 also includes engaging 808 the pipe end 104 of the transition assembly 102 with the pipe 52 to form the pipe boundary connection 162. In some cases, engaging 808 the transition assembly 102 with hose 54 includes inserting at least a portion of the pipe 52 into the transition assembly passage 116. When the pipe 52 is inserted into the transition assembly passage 116, a portion of the second inner surface 158 of the transition assembly 102 may contact the pipe contact surface 126 of the pipe 52. Engaging 809 the transition assembly 102 with the pipe 52 may include press-fitting the pipe 52 within the transition assembly passage 116 creating an interference fit, or any suitable fit, between second inner surface 158 of the transition assembly 102 and the pipe contact surface 126 of the pipe 52, thus retaining the position of the pipe 52 and the transition assembly 102. In some cases, engagement between the transition assembly 102 and the pipe 52 may not be necessarily tight, *e.g.,* the engagement may retain the position of the pipe 52 and the transition assembly 102, but in a fit that is not tight enough to create a seal between the pipe 52 and transition assembly 102 that would prevent leakage of a fluid (*e.g.,* a liquid and/or a gas). Alternatively, engagement between the transition assembly 102 and the pipe 52 may retain the position of the pipe 52 and the transition assembly 102 and create a seal between the pipe 52 and the transition assembly 102.

After the transition assembly 102 is engaged 808 with the pipe 52, method 800 includes forming 810 the pipe connection 110 between the transition assembly 102 and the pipe 52. The pipe connection 110 may create a seal, preventing leakage of a fluid, at the pipe boundary connection 162 between the transition assembly 102 and the pipe 52. The pipe connection 110 may also rigidly connect the pipe 52 and the transition assembly 102, preventing relative motion, e.g., axial translation and/or rotation, between the pipe 52 and the transition assembly 102. Forming 810 the pipe connection 110 between the pipe 52 and the transition assembly 102 may include one or more of the following processes: welding, brazing, and/or soldering. For example, forming 810 the pipe connection 110 may include heating adjacent components above or below, the melting point of the material of the components. In another example, forming 810 may include heating and/or melting a material and placing the melted material on both components. Cooling the melted material forms a connection between the two components.

Forming 810 the pipe connection 110 and/or the hose connection 108, may include an automated operation, e.g., a welding operation, having one or more automated steps. The welding operation may include mounting, e.g., rigidly fixing, the transition assembly 102. The transition assembly 102 includes one or more mounting surfaces, e.g., the outer surface 112 and/or the inner surface 114, that may be gripped during mounting. The transition assembly 102 may be mounted using any suitable mounting mechanism, such as a clamp. The transition assembly 102 may be minimally deformed when mounted with a gripping force sufficient to maintain the position of the transition assembly 102 without causing significant deformation or deflection of the transition assembly 102. In particular, the gripping force does not cause deformation or deflection of the transition assembly 102, such that the transition assembly 102 would not be enabled to function as described herein, e.g., a significant deformation would cause the transition assembly 102 to not be able to be engaged with the hose 54 and/or the pipe 52. For example, the transition assembly 102 may have size and shape, e.g., a thickness, and/or is composed of a suitable material, steel, or steel alloy, such that the assembly may be mounted without being significantly deformed.

The transition assembly 102 may then be engaged with either or both of the hose 54 and the pipe 52, as described above, when the transition assembly 102 is mounted. In another example, the transition assembly 102 may be mounted before, or after, the transition assembly 102 is engaged with the hose 54 and/or the pipe 52.

The automated process(es) may include forming one or more tack welds. The tack welds may be formed using an arc welding process using electricity to weld the hose 54 to the transition assembly 102 and/or the pipe 53 to the transition assembly 102. The tack welds may be formed spaced apart about the circumference of the hose boundary connection 160 between hose 54 and the transition assembly 102, and/or the pipe boundary connection 162 between the pipe 52 and the transition assembly 102. In some embodiments, the tack welds may be formed by a manual welding process. The tack welds maintain the relative position between the hose 54 and the transition assembly 102 and/or the pipe 52 and the transition assembly 102 for a subsequent automated process.

The automated process(es) may be performed by an orbital welding machine. The machine may clamp the transition assembly 102. The machine may rotate the transition assembly 102 while forming a weld about the entire circumference of the hose boundary connection 160 between the transition assembly 102 and the hose 54 and/or the pipe boundary connection 162 between the transition assembly 102 and the pipe 52. Alternatively, and/or additionally, the machine forms the weld about the entire circumference of the hose and/or pipe boundary connections 160, 162 by rotating a welding arc about the transition assembly 102. In another example, the automated process(es) may be performed by any suitable robotic welding machine. In alternative embodiments, the hose and pipe connections 108, 110 may be formed using a manual welding operation.

Forming 804 the hose connection 108 and the pipe connection 110 includes forming 810 the hose connection 108 and pipe connection 110 at least one of an axial distance and/or a radial distance apart.

In some embodiments, forming the joint 100 includes forming a connection, e.g., boundary connection 160, 162, by engaging the pipe 52 and/or the hose 54 with the transition assembly 102, and then subsequently forming the hose connection 108 and/or the pipe connection 110 at the boundary connections 160, 162, respectively. In alternative embodiments, forming the joint 100 may include forming the boundary connection 160, 162, by engaging the pipe 52 and/or the hose 54 with the transition assembly 102.

Exemplary embodiments described herein relate to methods and systems for use in forming a j oint, such as a sealed connection, between a pipe and a hose. The transition assembly, including a pipe connection end and an opposite hose connection end, maintains at least one of an axial separation and/or a radial separation, between the hose and the pipe. For example, the hose may be engaged with the transition assembly forming a hose boundary and the pipe may be engaged with the transition assembly forming a pipe boundary. Subsequently, two independent connections may be formed, i.e., a hose connection between the hose and the transition assembly and a pipe connection between the pipe and the transition assembly. The pipe and hose connections, e.g., welds, may be formed at the pipe boundary and the hose boundary such that the pipe and hose connections are spaced by at least one of an axial and/or radial distance apart. Accordingly, the first and second connections may be visually inspected, reformed, and /or tested, at least in part because the two connections are not overlapping. Furthermore, the transition assembly enables an automatic welding process to be performed at least because the transition assembly may be easily gripped by a mounting frame of the automatic welding machine.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

This written description uses examples to disclose the embodiments of systems and methods, including the best mode, and also to enable any person skilled in the art to practice the systems and methods, including making and using any devices or systems and performing any incorporated methods. The patentable scope of the systems and methods is defined by the claims, and may include other examples that occur to those skilled in the art.

## Claims

1. A method of connecting a pipe (52) and a hose (54) including a corrugated layer (132) and at least one secondary layer (140, 142) positioned radially outward from the corrugated layer, said method comprising:
providing a transition assembly (102) including a hose end (106), a pipe end (104) opposite the hose end (106), and an inner surface defining a transition assembly passage extending through the transition assembly from the hose end (106) to the pipe end,
wherein the hose end (106) is formed with a surface that is shaped complementary to a hose contact surface (138) of the corrugated layer of the hose (54), and wherein the surface includes a curved surface (150) formed with a radius of curvature that, in a cross-sectional view transverse to a longitudinal axis (A) of the transition assembly (102), substantially matches a radius of curvature of the hose contact surface (138);
engaging the hose end (106) of the transition assembly (102) with the hose (54) such that a first connection is formed between the transition assembly (102) and the hose (54), wherein when the surface is in contact with the hose contact surface, the surface is positioned adjacent the at least one secondary layer; and
engaging the pipe end (104) of the transition assembly (102) with the pipe (52) such that a second connection between the transition assembly and the pipe (52) is formed, wherein the second connection is spaced an axial distance from the first connection.

2. The method according to Claim 1, wherein engaging the pipe end (104) of the transition assembly (102) includes forming the second connection a radial distance from the first connection.

3. The method according to Claim 1, wherein engaging the hose end (106) of the transition assembly (102) includes inserting at least a portion of the hose end (106) of the transition assembly within a passage defined within the hose (54).

4. The method according to Claim 1, wherein engaging the pipe end (104) of the transition assembly includes inserting at least a portion of the pipe (52) within the transition assembly passage.

5. The method according to Claim 1, wherein the method further comprises:
forming a pipe connection at the first connection; and
forming a hose connection at the second connection.

6. The method according to Claim 5, wherein forming the pipe connection and the hose connection includes at least one of brazing, welding, and soldering.

7. The method according to Claim 1, wherein forming the pipe and hose connections includes forming a fillet weld.

8. The method according to Claim 1, wherein forming the pipe and hose connection comprises:
mounting the transition assembly to a mounting frame;
inserting at least a portion of the transition assembly within a hose passage;
forming at least one tack weld between the transition assembly (102) and the hose; and
forming a circular weld that circumscribes the transition assembly (102) using an automated orbital welding device.

9. The method according to Claim 8, wherein forming the at least one tack weld includes forming the at least one tack weld using arc welding.

10. A connection system for connecting a hose (54) and a pipe (52), the connection system comprising: a transition assembly (102), a pipe (52) and a hose (54) including a corrugated layer (132) and at least one secondary layer (140, 142) positioned radially outward from the corrugated layer, wherein the transition assembly (102) comprises:
a pipe end (104) formed with a first surface that is shaped complementary to a pipe contact surface (126) of the pipe (52);
an opposite hose end (106) formed with a second surface that is shaped complementary to a hose contact surface (138) of the corrugated layer of the hose (54); and
an inner surface (114) defining a transition assembly passage that extends between the pipe and hose ends, and wherein a first connection is formed when the hose (54) is engaged with the hose end (106) and a second connection is formed when the pipe (52) is engaged with the pipe end (104), wherein the second connection is spaced an axial distance from the first connection, wherein the second surface is in contact with the hose contact surface, the second surface is positioned adjacent the at least one secondary layer;
wherein the second surface includes a curved surface (150) formed with a radius of curvature that, in a cross-sectional view transverse to a longitudinal axis (A) of the transition assembly (102), substantially matches a radius of curvature of the hose contact surface (138).

11. The system according to Claim 10, wherein the first surface includes a cylindrical surface formed with having a radius of curvature that substantially matches a radius of curvature of the pipe contact surface (126) of the pipe (52).

12. The system according to Claim 10, wherein the inner surface (114) includes a first inner surface formed with a first radius and a second inner surface formed with a second radius that is different than the first radius.

13. The system according to Claim 10, wherein the inner surface (114) and an outer surface each include at least one rounded edge.

## Patentansprüche

1. Verfahren zum Verbinden eines Rohrs (52) und eines Schlauchs (54), einschließlich einer gewellten Schicht (132) und mindestens einer sekundären Schicht (140, 142), die radial außerhalb von der gewellten Schicht positioniert ist, das Verfahren umfassend:
Bereitstellen einer Übergangsanordnung (102), einschließlich eines Schlauchendes (106), eines Rohrendes (104), das dem Schlauchende (106) gegenüberliegt und einer Innenoberfläche, die einen Übergangsanordnungsdurchgang, der sich durch die Übergangsanordnung von dem Schlauchende (106) zu dem Rohrende erstreckt, definiert,
wobei das Schlauchende (106) mit einer Oberfläche, die zu einer Schlauchkontaktoberfläche (138) der gewellten Schicht des Schlauchs (54) komplementär geformt ist, ausgebildet ist, und wobei die Oberfläche eine gekrümmte Oberfläche (150), die mit einem Krümmungsradius ausgebildet ist, der, in einer Querschnittsansicht quer zu einer Längsachse (A) der Übergangsanordnung (102), im Wesentlichen einem Krümmungsradius der Schlauchkontaktoberfläche (138) entspricht, einschließt;
derart Ineingriffbringen des Schlauchendes (106) der Übergangsanordnung (102) mit dem Schlauch (54), dass eine erste Verbindung zwischen der Übergangsanordnung (102) und dem Schlauch (54) ausgebildet wird, wobei, wenn die Oberfläche in Kontakt mit der Schlauchkontaktoberfläche ist, die Oberfläche an die mindestens eine sekundäre Schicht angrenzend positioniert ist; und
derart Ineingriffbringen des Rohrendes (104) der Übergangsanordnung (102) mit dem Rohr (52), dass eine zweite Verbindung zwischen der Übergangsanordnung und dem Rohr (52) ausgebildet wird, wobei die zweite Verbindung um einen axialen Abstand von der ersten Verbindung beabstandet ist.

2. Verfahren nach Anspruch 1, wobei das Ineingriffbringen des Rohrendes (104) der Übergangsanordnung (102) das Ausbilden der zweiten Verbindung in einem radialen Abstand von der ersten Verbindung einschließt.

3. Verfahren nach Anspruch 1, wobei das Ineingriffbringen des Schlauchendes (106) der Übergangsanordnung (102) ein Einführen mindestens eines Abschnitts des Schlauchendes (106) der Übergangsanordnung innerhalb eines Durchgangs, der innerhalb des Schlauchs (54) definiert ist, einschließt.

4. Verfahren nach Anspruch 1, wobei das Ineingriffbringen des Rohrendes (104) der Übergangsanordnung das Einführen mindestens eines Abschnitts des Rohrs (52) innerhalb des Übergangsanordnungsdurchgangs einschließt.

5. Verfahren nach Anspruch 1, wobei das Verfahren ferner umfasst:
Ausbilden einer Rohrverbindung an der ersten Verbindung; und
Ausbilden einer Schlauchverbindung an der zweiten Verbindung.

6. Verfahren nach Anspruch 5, wobei das Ausbilden der Rohrverbindung und der Schlauchverbindung mindestens eines von Hartlöten, Schweißen und Weichlöten einschließt.

7. Verfahren nach Anspruch 1, wobei das Ausbilden der Rohr- und der Schlauchverbindung das Ausbilden einer Kehlnaht einschließt.

8. Verfahren nach Anspruch 1, wobei das Ausbilden der Rohr- und der Schlauchverbindung umfasst:
Montieren der Übergangsanordnung an einem Montagerahmen;
Einführen mindestens eines Abschnitts der Übergangsanordnung innerhalb eines Schlauchdurchgangs;
Ausbilden mindestens einer Heftnaht zwischen der Übergangsanordnung (102) und dem Schlauch; und
Ausbilden einer kreisförmigen Schweißnaht, die die Übergangsanordnung (102) umgibt, unter Verwendung einer automatisierten Orbitalschweißvorrichtung.

9. Verfahren nach Anspruch 8, wobei das Ausbilden der mindestens einen Heftnaht das Ausbilden der mindestens einen Heftnaht unter Verwendung von Lichtbogenschweißen einschließt.

10. Verbindungssystem zum Verbinden eines Schlauchs (54) und eines Rohrs (52), das Verbindungssystem umfassend: eine Übergangsanordnung (102), ein Rohr (52) und einen Schlauch (54), einschließlich einer gewellten Schicht (132) und mindestens einer sekundären Schicht (140, 142), die radial außerhalb von der gewellten Schicht positioniert ist, wobei die Übergangsanordnung (102) umfasst:
ein Rohrende (104), das mit einer ersten Oberfläche, die zu einer Rohrkontaktoberfläche (126) des Rohrs (52) komplementär geformt ist, ausgebildet ist;
ein gegenüberliegendes Schlauchende (106), das mit einer zweiten Oberfläche, die zu einer Schlauchkontaktoberfläche (138) der gewellten Schicht des Schlauchs (54) komplementär geformt ist, ausgebildet ist; und
eine Innenoberfläche (114), die einen Übergangsanordnungsdurchgang, der sich zwischen dem Rohr- und dem Schlauchende erstreckt, definiert, und wobei eine erste Verbindung ausgebildet wird, wenn der Schlauch (54) mit dem Schlauchende (106) in Eingriff steht, und eine zweite Verbindung ausgebildet wird, wenn das Rohr (52) mit dem Rohrende (104) in Eingriff steht, wobei die zweite Verbindung in einem axialen Abstand von der ersten Verbindung beabstandet ist, wobei die zweite Oberfläche in Kontakt mit der Schlauchkontaktoberfläche ist, die zweite Oberfläche an die mindestens eine sekundäre Schicht angrenzend positioniert ist;
wobei die zweite Oberfläche eine gekrümmte Oberfläche (150), die mit einem Krümmungsradius ausgebildet ist, der, in einer Querschnittsansicht quer zu einer Längsachse (A) der Übergangsanordnung (102), im Wesentlichen einem Krümmungsradius der Schlauchkontaktoberfläche (138) entspricht, einschließt.

11. System nach Anspruch 10, wobei die erste Oberfläche eine zylindrische Oberfläche, die mit einem Krümmungsradius aufweisend ausgebildet ist, der im Wesentlichen einem Krümmungsradius der Rohrkontaktoberfläche (126) des Rohrs (52) entspricht, einschließt.

12. System nach Anspruch 10, wobei die Innenoberfläche (114) eine erste Innenoberfläche, die mit einem ersten Radius ausgebildet ist, und eine zweite Innenoberfläche, die mit einem zweiten Radius ausgebildet ist, der sich von dem ersten Radius unterscheidet, einschließt.

13. System nach Anspruch 10, wobei die Innenoberfläche (114) und eine Außenoberfläche jede mindestens eine abgerundete Kante einschließen.

## Revendications

1. Procédé de raccordement d'un tube (52) et d'un flexible (54) comportant une couche ondulée (132) et au moins une couche secondaire (140, 142) positionnée radialement à l'extérieur de la couche ondulée, ledit procédé comprenant :
la fourniture d'un ensemble de transition (102) comportant une extrémité de flexible (106), une extrémité de tube (104) en regard de l'extrémité de flexible (106), et une surface interne définissant un passage d'ensemble de transition s'étendant à travers l'ensemble de transition de l'extrémité de flexible (106) à l'extrémité de tube,
dans lequel l'extrémité de flexible (106) est formée avec une surface qui est de forme complémentaire à une surface de contact de flexible (138) de la couche ondulée du flexible (54), et dans lequel la surface comporte une surface incurvée (150) formée avec un rayon de courbure qui, dans une vue en coupe transversale à un axe longitudinal (A) de l'ensemble de transition (102), correspond sensiblement à un rayon de courbure de la surface de contact de flexible (138) ;
la mise en prise de l'extrémité de flexible (106) de l'ensemble de transition (102) avec le flexible (54) de telle sorte qu'un premier raccordement est formé entre l'ensemble de transition (102) et le flexible (54), dans lequel lorsque la surface est en contact avec la surface de contact de flexible, la surface est positionnée de manière adjacente à l'au moins une couche secondaire ; et
la mise en prise de l'extrémité de tube (104) de l'ensemble de transition (102) avec le tube (52) de telle sorte qu'un second raccordement entre l'ensemble de transition et le tube (52) soit formé, dans lequel le second raccordement est espacé d'une distance axiale du premier raccordement.

2. Procédé selon la revendication 1, dans lequel la mise en prise de l'extrémité de tube (104) de l'ensemble de transition (102) comporte la formation du second raccordement à une distance radiale du premier raccordement.

3. Procédé selon la revendication 1, dans lequel la mise en prise de l'extrémité de flexible (106) de l'ensemble de transition (102) comporte l'insertion d'au moins une partie de l'extrémité de flexible (106) de l'ensemble de transition à l'intérieur d'un passage défini à l'intérieur du flexible (54).

4. Procédé selon la revendication 1, dans lequel la mise en prise de l'extrémité de tube (104) de l'ensemble de transition comporte l'insertion d'au moins une partie du tube (52) à l'intérieur du passage de l'ensemble de transition.

5. Procédé selon la revendication 1, dans lequel le procédé comprend en outre :
la formation d'un raccordement de tube au niveau du premier raccordement ; et
la formation d'un raccordement de flexible au niveau du second raccordement.

6. Procédé selon la revendication 5, dans lequel la formation du raccordement de tube et du raccordement de flexible comporte au moins l'un parmi brasage, soudage et brasage tendre.

7. Procédé selon la revendication 1, dans lequel la formation des raccordements de tube et de flexible comporte la formation d'une soudure d'angle.

8. Procédé selon la revendication 1, dans lequel la formation du raccordement de tube et de flexible comprend :
le montage de l'ensemble de transition sur un cadre de montage ;
l'insertion d'au moins une partie de l'ensemble de transition dans un passage de flexible ;
la formation d'au moins une soudure de pointage entre l'ensemble de transition (102) et le flexible ; et
la formation d'une soudure circulaire qui entoure l'ensemble de transition (102) à l'aide d'un dispositif de soudage orbital automatisé.

9. Procédé selon la revendication 8, dans lequel la formation de l'au moins une soudure de pointage comporte la formation de l'au moins une soudure de pointage à l'aide d'un soudage à l'arc.

10. Système de raccordement permettant de raccorder un flexible (54) et un tube (52), le système de raccordement comprenant : un ensemble de transition (102), un tube (52) et un flexible (54) comportant une couche ondulée (132) et au moins une couche secondaire (140, 142) positionnée radialement vers l'extérieur de la couche ondulée, dans lequel l'ensemble de transition (102) comprend :
une extrémité de tube (104) formée avec une première surface qui est de forme complémentaire à une surface de contact de tube (126) du tube (52) ;
une extrémité de flexible (106) en regard formée avec une seconde surface qui est de forme complémentaire à une surface de contact de flexible (138) de la couche ondulée du flexible (54) ; et
une surface interne (114) définissant un passage d'ensemble de transition qui s'étend entre les extrémités de tube et de flexible, et dans lequel un premier raccordement est formé lorsque le flexible (54) est en prise avec l'extrémité de flexible (106) et un second raccordement est formé lorsque le tube (52) est en prise avec l'extrémité de tube (104), dans lequel le second raccordement est espacé d'une distance axiale du premier raccordement, dans lequel la seconde surface est en contact avec la surface de contact de flexible, la seconde surface est positionnée de manière adjacente à l'au moins une couche secondaire ;
dans lequel la seconde surface comporte une surface incurvée (150) formée avec un rayon de courbure qui, dans une vue en coupe transversale à un axe longitudinal (A) de l'ensemble de transition (102), correspond sensiblement à un rayon de courbure de la surface de contact de flexible (138).

11. Système selon la revendication 10, dans lequel la première surface comporte une surface cylindrique formée avec un rayon de courbure qui correspond sensiblement à un rayon de courbure de la surface de contact de tube (126) du tube (52).

12. Système selon la revendication 10, dans lequel la surface interne (114) comporte une première surface interne formée avec un premier rayon et une seconde surface interne formée avec un second rayon qui est différent du premier rayon.

13. Système selon la revendication 10, dans lequel la surface interne (114) et une surface externe comportent chacune au moins un bord arrondi.
